# EUROPÄISCHE PATENTSCHRIFT

(11) **EP 2 598 761 B1**
(45) Veröffentlichungstag und Bekanntmachung des Hinweises auf die Patenterteilung: **28.12.2016**
(21) Anmeldenummer: 11729986.7
(22) Anmeldetag: 05.07.2011
(51) Int. Cl.: F16B 37/08

(54) **VORRICHTUNG ZUM AUFSTECKEN AUF EINEN GEWINDEBOLZEN**
DEVICE FOR PLUGGING ONTO A THREADED BOLT
DISPOSITIF À MONTER SUR UN AXE FILETÉ

(30) Priorität: 29.07.2010 DE 102010032778
(43) Veröffentlichungstag der Anmeldung: 05.06.2013
(73) Patentinhaber: A. RAYMOND et Cie, 38000 Grenoble (FR)
(72) Erfinder: GOMBERT, Stéphane, F-38640 Claix (FR)
(74) Vertreter: König Szynka Tilmann von Renesse Patentanwälte Partnerschaft mbB
(86) Internationale Anmeldenummer: PCT/EP2011/061328
(87) Internationale Veröffentlichungsnummer: WO 2012/013458

(56) Entgegenhaltungen:
- GB-A- 2 281 586
- US-A1- 2003 147 720

## Beschreibung

Die Erfindung betrifft eine Vorrichtung zum Aufstecken auf einen Gewindebolzen gemäß dem Oberbegriff des Patentanspruches 1.

Eine derartige Vorrichtung ist aus GB 2 281 586 A bekannt. Diese Vorrichtung zum Aufstecken auf einen Gewindebolzen verfügt über ein Trägerelement und über zwei elastische Rastarme, die jeweils mit einem Fußabschnitt an dem Trägerelement einander diametral gegenüberliegend beidseitig einer in das Trägerelement ausgebildeten Durchsteckausnehmung angeformt sind und einen dem Trägerelement abgewandten Kopfabschnitt aufweisen, an dem eine Zahnstruktur zum Eingriff mit einem Gewindebolzen ausgebildet ist. An jedem Rastarm ist ein Manipulationsteil angeformt, mit dem der betreffende Rastarm in radialer Richtung außer Eingriff mit einem Gewindebolzen bewegbar ist. Bei der vorgenannten Vorrichtung ist jedes Manipulationsteil als ein sich im Wesentlichen in Längsrichtung erstreckender Anlenkstift gebildet, mit dem bei Ausüben einer Kraft in axialer Richtung die Rastarme zum Freigeben eines Gewindebolzens voneinander weg bewegbar sind.

Aus US 2003/0147720 A1 ist eine weitere Vorrichtung zum Aufstecken auf einen Gewindebolzen bekannt, die bis auf die Ausrichtung der Manipulationsteile entsprechend der vorgenannten gattungsgemäßen Vorrichtung ausgebildet ist. Bei dieser Vorrichtung sind die Anlenkstifte zur Längsrichtung schräg ausgerichtet.

Weitere Vorrichtungen zum Aufstecken auf einen Gewindebolzen sind beispielsweise aus US 2009/0028668 A1 oder aus DE 10 2005 026 855 A1 bekannt. Diese vorbekannten Vorrichtungen verfügen über ein Trägerelement und über zwei elastische Rastarme. Die Rastarme sind mit einem Fußabschnitt an dem Trägerelement angeformt und weisen einen dem Trägerelement abgewandten Kopfabschnitt auf. An dem Kopfabschnitt ist eine Zahnstruktur zum Eingriff mit einem Gewindebolzen ausgebildet. In einer Endmontageanordnung liegen die Rastarme mit einer gewissen Vorspannung an dem Gewindebolzen an und sichern die Vorrichtung an dem Gewindebolzen.

Der Erfindung liegt die Aufgabe zugrunde, eine Vorrichtung der eingangs genannten Art anzugeben, die sich verhältnismäßig einfach von einem Gewindebolzen lösen lässt.

Diese Aufgabe wird bei einer Vorrichtung der eingangs genannten Art erfindungsgemäß mit den kennzeichnenden Merkmalen des Patentanspruches 1 gelöst.

Dadurch, dass jedes Manipulationsteil eine Anlenkplatte und eine Manipulationsplatte aufweist, wobei die Anlenkplatten und die Manipulationsplatten von jeweils zwei einander diametral gegenüberliegenden Rastarmen derart parallel zueinander ausgerichtet sind und sich von den Rastarmen wegweisend nach außen erstrecken, ergibt sich bei einer Krafteinleitung rechtwinklig zur Längsrichtung ein von Axialkräften im Wesentlichen freies Lösen der Rastarme von einem Gewindebolzen.

Zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung eines Ausführungsbeispieles mit Bezug auf die Figuren der Zeichnung.

Es zeigen:
- Fig. 1: in einer perspektivischen Ansicht eine als Leitungshalter ausgebildete erfindungsgemäße Vorrichtung,
- Fig. 2: in einer perspektivischen Ansicht einen Ausschnitt aus der erfindungsgemäßen Vorrichtung gemäß Fig. 1 im Bereich von zwei Rastarmen und
- Fig. 3: in einer perspektivischen einen Ausschnitt aus der erfindungsgemäßen Vorrichtung gemäß Fig. 1 in einer auf einen Gewindebolzen aufgesteckten Endmontageanordnung.

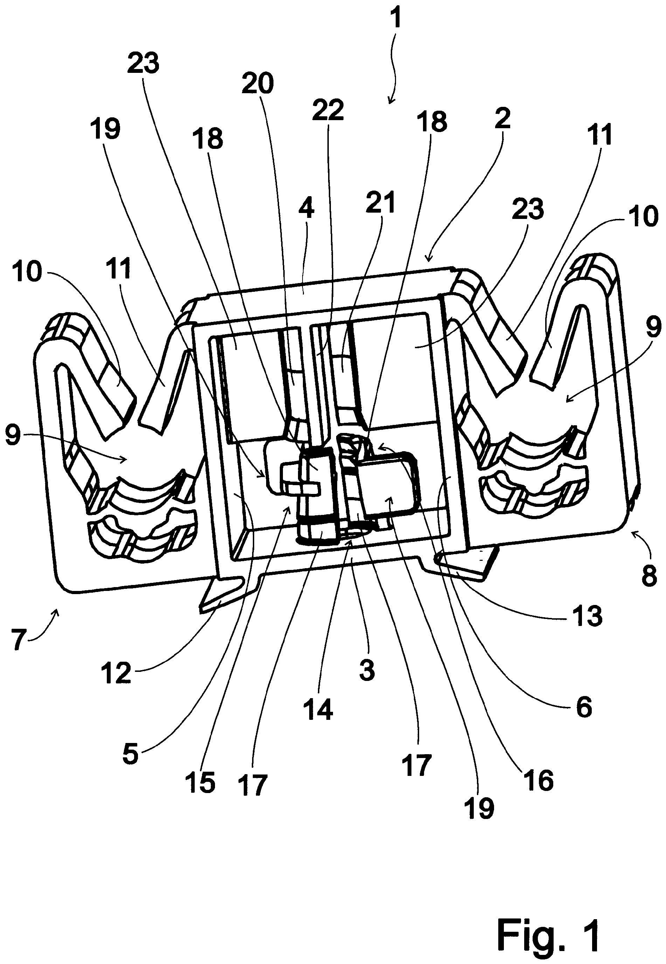

Fig. 1 zeigt in einer perspektivischen Ansicht ein Ausführungsbeispiel einer erfindungsgemäßen Vorrichtung, die hier als aus einem hartelastischen Kunststoffmaterial hergestellter zweiarmiger Leitungshalter 1 ausgebildet ist. Der Leitungshalter 1 verfügt über einen rechteckartig ausgebildeten Innenrahmen 2, der aus einer Grundplatte 3 als Trägerelement, aus einer der Grundplatte 3 in einem Abstand und parallel zu dieser angeordneten Deckplatte 4 sowie aus zwei Seitenplatten 5, 6 aufgebaut ist. Die Seitenplatten 5, 6 sind parallel zueinander ausgerichtet und verbinden die Grundplatte 3 sowie die Deckplatte 4 miteinander. An jeder Seitenplatte 5, 6 ist ein sich nach außen von dem Innenrahmen 2 weg erstreckender Haltearm 7, 8 angeformt, mit denen in an sich bekannter Art und Weise jeweils in einem Aufnahmeraum 9 wenigstens eine Leitung positionierbar und über wenigstens einen Halteflügel 10, 11 festlegbar ist.

Bei dem Ausführungsbeispiel gemäß Fig. 1 sind auf der der Deckplatte 4 abgewandten Seite der Grundplatte 3 zwei Abstützzungen 12, 13 ausgebildet, die von der Grundplatte 3 wegweisend schräg nach außen jeweils in Richtung eines Haltearmes 7, 8 abgestellt sind.

Die Grundplatte 3 ist mit einer vorzugsweise mittig angeordneten rundlichen Durchsteckausnehmung 14 versehen, in deren seitlichen Randbereichen bei diesem Ausführungsbeispiel zwei Rastarme 15, 16 angeordnet sind. Jeder Rastarm 15, 16 erstreckt sich über einen Umfangsabschnitt von im Wesentlichen 90 Grad, wobei in Umfangsrichtung zwischen den Rastarmen 15, 16 sich jeweils ebenfalls über 90 Grad erstreckende Freiräume ausgebildet sind. Jeder Rastarm 15, 16 ist mit einem im Wesentlichen rechtwinklig zu der Grundplatte 3 ausgerichteten Fußabschnitt 17 an der den Abstützzungen 12, 13 gegenüber liegenden Seite an die Grundplatte 3 angeformt und weist auf der der Grundplatte 3 abgewandten Seite des Fußabschnittes 17 einen radial nach innen geneigten Kopfabschnitt 18 auf. An den radial außen liegenden Seiten jedes Kopfabschnittes 18 ist ein Manipulationsteil 19 angeformt.

An der der Grundplatte 3 zugewandten Seite der Deckplatte 4 sind den Rastarmen 15, 16 in axialer Richtung gegenüber liegende Führungsschalen 20, 21 angeformt, die sich von der Deckplatte 4 bis auf einen verhältnismäßig kleinen Abstand bis zu den Rastarmen 15, 16 erstrecken. Die Führungsschalen 20, 21 erstrecken sich in Umfangsrichtung ebenfalls um etwa 90 Grad und sind in Bezug auf die Durchsteckausnehmung 14 einander diametral gegenüber liegend angeordnet. Jede Führungsschale 20, 21 ist über einen an einer Längsseite mit der Führungsschale 20, 21 sowie mit der Deckplatte 4 verbundenen ersten Stabilisierungssteg 22 und über einen mit der anderen Längsseite der betreffenden Führungsschale 20, 21, der Deckplatte 4 und einer Seitenplatte 5, 6 verbundenen zweiten Stabilisierungssteg 23 gegen Verformung in radialer Richtung stabilisiert.

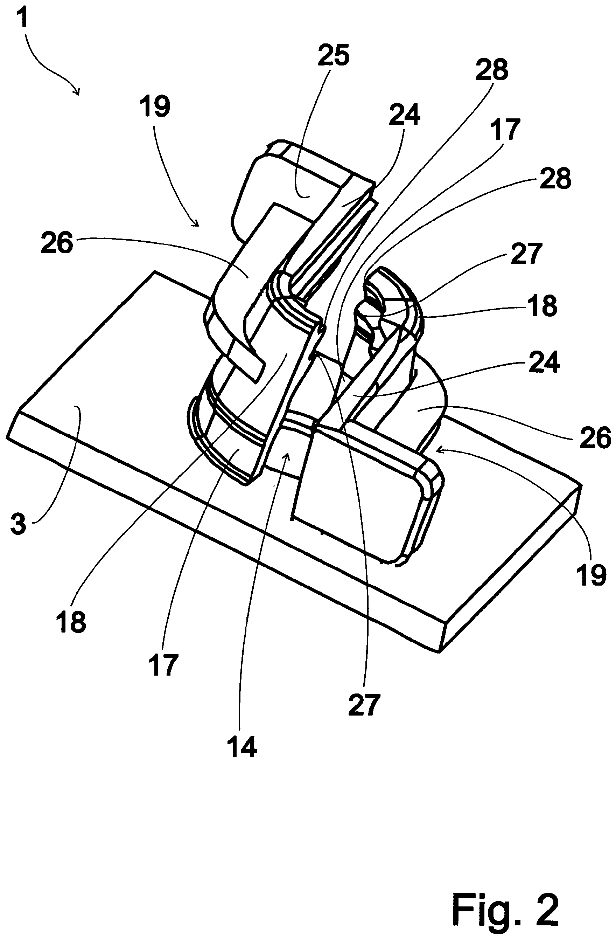

Fig. 2 zeigt in einer perspektivischen Ansicht einen Ausschnitt des Leitungshalters 1 gemäß Fig. 1 als Ausführungsbeispiel einer erfindungsgemäßen Vorrichtung im Bereich der Rastarme 15, 16. Fig. 2 lässt sich entnehmen, dass jedes Manipulationsteil 19 über eine Anlenkplatte 24 verfügt, die an voneinander abgewandten Seiten der Kopfabschnitte 18 an die Rastarme 15, 16 angeformt sind und die sich in paralleler Ausrichtung zueinander von den Rastarmen 15, 16 wegweisend nach außen erstrecken.

An den den Rastarmen 15, 16 abgewandten Enden der Anlenkplatten 24 ist an jeder Anlenkplatte 24 eine Manipulationsplatte 25 angeformt, die sich in etwa rechtwinklig zu der betreffenden Anlenkplatte 24 von dem jeweils anderen Rastarm 15, 16 wegweisend nach außen erstrecken. Die Manipulationsplatten 25 sind somit ebenfalls parallel zueinander ausgerichtet und in Bezug auf die Durchsteckausnehmung 14 einander diametral gegenüber liegend angeordnet.

Weiterhin verfügt jedes Manipulationsteil 19 über eine Versteifungsrippe 26, die an dem Kopfabschnitt 18 eines Rastarmes 15, 16, an der Anlenkplatte 24 auf der dem jeweils anderen Rastarm 15, 16 abgewandten Seite und an die Manipulationsplatte 25 auf ihrer der Anlenkplatte 24 zugewandten Seite angeformt ist, so dass eine Versteifung der Manipulationsplatte 25 gegen ein übermäßiges Verbiegen in Richtung der Anlenkplatte 24 erzielt und das Manipulationsteil 19 insgesamt stabil mit dem jeweiligen Rastarm 15, 16 verbunden ist.

Weiterhin lässt sich der Darstellung gemäß Fig. 2 entnehmen, dass jeder Rastarm 15, 16 über eine Zahnstruktur verfügt, die bei dem dargestellten Ausführungsbeispiel zwei in axialer Richtung voneinander beabstandete Rastzähne 27, 28 aufweist. Jeder Rastzahn 27, 28 ist auf seiner der Durchsteckausnehmung 14 zugewandten Seite schräg mit einer mit zunehmendem Abstand von der Grundplatte 3 radial nach innen laufenden Ausrichtung und auf seiner der Grundplatte 3 abgewandten Seite mit einer im Wesentlichen parallel zu der Grundplatte 3 ausgerichteten Hinterrastfläche ausgebildet.

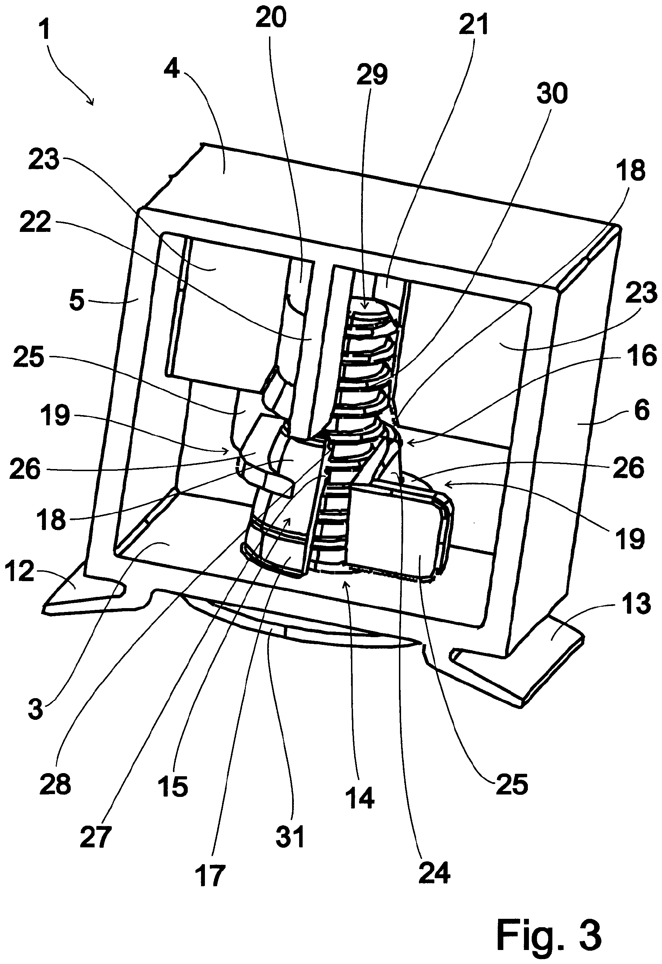

Fig. 3 zeigt in einer perspektivischen Ansicht einen Ausschnitt des Leitungshalters 1 gemäß Fig. 1 im Bereich des Innenrahmens 2 in einer auf einen Gewindebolzen 29 aufgesteckten Endmontageanordnung. Der Gewindebolzen 29 verfügt über ein Grobgewinde mit im Vergleich zur Steigung verhältnismäßig weit voneinander beabstandeten Gewindegängen 30 und ist mit einem Ende an einem in Fig. 3 nur teilweise dargestellten Trägerteil 31 befestigt.

In der Endmontageanordnung gemäß Fig. 3 liegen die Rastarme 15, 16 mit Vorspannung unter Eingriff der Rastzähne 27, 28 mit den Gewindegängen 30 an dem Gewindebolzen 29 an, der mit seinem dem Trägerteil 31 abgewandten Ende zwischen den Führungsschalen 20, 21 angeordnet ist. Dadurch ist der Leitungshalter 1 stabil und gegen unbeabsichtigtes Entfernen gesichert an dem Gewindebolzen 29 angebracht.

Bei Ausüben einer Schubkraft auf die Manipulationsplatten 25 bewegen sich die Rastarme 15, 16 mit den Rastzähnen 27, 28 außer Eingriff mit den Gewindegängen 30, so dass nunmehr die erfindungsgemäße Vorrichtung sehr einfach von dem Gewindebolzen 29 entfernbar ist. Durch die symmetrische Anordnung der Manipulationsplatten 25 in Bezug auf die Durchsteckausnehmung 14 wird dabei im Wesentlichen kein Drehmoment auf den Leitungshalter 1 ausgeübt.

## Patentansprüche

1. Vorrichtung zum Aufstecken auf einen Gewindebolzen (29) mit einem Trägerelement (3) und mit wenigstens zwei elastischen Rastarmen (15, 16), die jeweils mit einem Fußabschnitt (17) an dem Trägerelement (3) einander diametral gegenüber liegend beidseitig einer in das Trägerelement (3) ausgebildeten Durchsteckausnehmung (14) angeformt sind und einen dem Trägerelement (3) abgewandten Kopfabschnitt (18) aufweisen, an dem eine Zahnstruktur (27, 28) zum Eingriff mit dem Gewindebolzen (29) ausgebildet ist, wobei an jedem Rastarm (15, 16) ein Manipulationsteil (19) angeformt ist, mit dem der betreffende Rastarm (15, 16) in radialer Richtung außer Eingriff mit dem Gewindebolzen (29) bewegbar ist, **dadurch gekennzeichnet, dass** jedes Manipulationsteil (19) eine Anlenkplatte (24) und eine Manipulationsplatte (25) aufweist, wobei die Anlenkplatten (24) an voneinander abgewandten Seiten von Kopfabschnitten (18) an die Rastarme (15, 16) angeformt sind sowie sich in paralleler Ausrichtung zueinander von den Rastarmen (15, 16) wegweisend nach außen erstrecken und wobei die Manipulationsplatten (25) von jeweils zwei einander diametral gegenüber liegenden Rastarmen (15, 16) an den Rastarmen (15, 16) abgewandten Enden an die jeweilige Anlenkplatte (24) angeformt sowie derart parallel zueinander ausgerichtet sind, dass sich bei Ausüben einer Schubkraft auf die Manipulationsplatte (25) die Rastarme (15, 16) außer Eingriff mit dem Gewindebolzen (29) bewegen.

2. Vorrichtung nach Anspruch 1, **dadurch gekennzeichnet, dass** jede Manipulationsplatte (25) über eine rechtwinklig zu ihr ausgerichtete Anlenkplatte (24) mit dem betreffenden Rastarm (15, 16) verbunden ist.

3. Vorrichtung nach Anspruch 2, **dadurch gekennzeichnet, dass** an der Manipulationsplatte (25) und an der Anlenkplatte (24) eines Manipulationsteiles (19) eine Versteifungsrippe (26) ausgebildet ist.

4. Vorrichtung nach einem der Ansprüche 1 bis 3, **dadurch gekennzeichnet, dass** die Zahnstruktur jedes Rastarmes (15, 16) zwei in Längsrichtung voneinander beabstandete Rastzähne (27, 28) aufweist.

## Claims

1. Device for plugging onto a threaded stud (29), having a support member (3) and having at least two elastic latching arms (15, 16) which are each integrally formed onto the support member (3), by a foot portion (17), diametrically opposite one another and on the two sides of an opening (14) formed in the support member (3) for plugging-on to take place through, and which each have a head portion (18), remote from the support member (3), on which is formed a toothed structure (27, 28) for engagement with the threaded stud (29), there being integrally formed on each latching arm (15, 16) a manipulating part (19) with which the latching arm (15, 16) concerned can be moved out of engagement with the threaded stud (29) in the radial direction, **characterised in that** each manipulating part (19) has a connecting strip (24) and a manipulating tab (25), the connecting strips (24) being integrally formed on the latching arms (15, 16) on sides which are remote from one another of head portions (18) and extending outwards in a parallel alignment to one another to point away from the latching arms (15, 16), and the manipulating tabs (25), of two latching arms (15, 16) which are situated diametrically opposite one another, being integrally formed on the respective connecting strips (24) at ends remote from the latching arms (15, 16) and being aligned parallel to one another in such a way that the latching arms (15, 16) move out of engagement with the threaded stud (29) when a thrust force is exerted on the manipulating tab (25).

2. Device according to claim 1, **characterised in that** each manipulating tab (25) is connected to the latching arm (15, 16) concerned via a connecting strip (24) which is aligned at right angles to the said manipulating tab (25).

3. Device according to claim 2, **characterised in that** a stiffening rib (26) is formed on the manipulating tab (25) and connecting strip (24) of a manipulating part (19).

4. Device according to one of claims 1 to 3, **characterised in that** the toothed structure on each latching arm (15, 16) has two latching teeth (27, 28) which are spaced away from one another in the longitudinal direction.

## Revendications

1. Dispositif pour l'encliquetage sur un boulon fileté (29) comportant un élément de support (3) et avec au moins deux bras d'arrêt élastiques (15, 16), lesquels sont chacun moulés à l'élément de support (3) par l'intermédiaire d'un tronçon de pied (17) et disposés de façon diamétralement opposée de part et d'autre d'un évidement de traversée (14) formé dans l'élément de support (3), et qui présentent un tronçon de tête (18) opposé à l'élément de support (3), tronçon de tête (18) sur lequel est formée une structure filetée (27,28) pour l'engagement avec le boulon fileté (29), un élément de manipulation (19) étant formé sur chaque bras d'arrêt élastique (15,16), élément de manipulation (19) avec lequel le bras d'arrêt élastique (15,16) concerné peut être mis en mouvement en direction radiale hors de l'engagement avec le boulon fileté (29), **caractérisé en ce que** chaque élément de manipulation (19) présente une plaque de pivotement (24) et une plaque de manipulation (25), pour lequel les plaques de pivotement (24) sont moulées aux bras d'arrêt élastiques (15,16) au niveau des côtés des tronçons de tête (18) opposés l'un à l'autre et s'étendent à partir des bras d'arrêt élastiques (15,16) vers l'extérieur et de façon parallèle l'une à l'autre, et pour lequel les plaques de manipulation (25) de, à chaque fois, deux bras d'arrêt élastiques (15,16) diamétralement opposés l'un à l'autre sont moulées à la plaque de pivotement (24) correspondante au niveau des côtés opposés des bras d'arrêt élastiques (15,16) et sont disposées l'une par rapport à l'autre d'une façon parallèle telle que lors de l'exercice d'une force de pression sur la plaque de manipulation (25), les bras d'arrêt élastiques (15,16) se mettent en mouvement hors de l'engagement avec le boulon fileté (29).

2. Dispositif selon la revendication 1, **caractérisé en ce que** chaque plaque de manipulation (25) est reliée au bras d'arrêt élastique (15,16) correspondant par l'intermédiaire d'une plaque de pivotement (24) disposée à angle droit par rapport à elle.

3. Dispositif selon la revendication 2, **caractérisé en ce qu'**une nervure de renforcement (26) est formée au niveau de la plaque de manipulation (25) et de la plaque de pivotement (24) d'un élément de manipulation (19).

4. Dispositif selon l'une des revendications 1 à 3, **caractérisé en ce que** la structure filetée de chaque bras d'arrêt élastique (15,16) présente deux dents d'arrêt (27,28) éloignées l'une de l'autre en direction longitudinale.
